# EUROPÄISCHE PATENTSCHRIFT

(11) **EP 2 158 275 B1**
(45) Veröffentlichungstag und Bekanntmachung des Hinweises auf die Patenterteilung: **01.02.2012**
(21) Anmeldenummer: 08759734.0
(22) Anmeldetag: 19.05.2008
(51) Int. Cl.: C09D 5/02, C09D 7/12

(54) **HYDROPHOBE OBERFLÄCHENBESCHICHTUNG FÜR ELEKTRONISCHE UND ELEKTROTECHNISCHE KOMPONENTEN SOWIE VERWENDUNGEN DAZU**
HYDROPHOBIC SURFACE COATING FOR ELECTRONIC AND ELECTRO-TECHNICAL COMPONENTS AND USES THEREOF
REVÊTEMENT DE SURFACE HYDROPHOBE POUR COMPOSANTS ÉLECTRONIQUES OU ÉLECTROTECHNIQUES, ET APPLICATIONS CORRESPONDANTES

(30) Priorität: 21.05.2007 DE 102007023555
(43) Veröffentlichungstag der Anmeldung: 03.03.2010
(73) Patentinhaber: Siemens Aktiengesellschaft, 80333 München (DE)
(72) Erfinder: BERNDT, Anett, 91058 Erlangen (DE); GENSLER, Rudolf, Singapore 596288 (SG); KAPITZA, Heinrich, 90765 Fürth (DE); ZEININGER, Heinrich, 90587 Obermichelbach (DE)
(74) Vertreter: Wolff, Harry
(86) Internationale Anmeldenummer: PCT/EP2008/056108
(87) Internationale Veröffentlichungsnummer: WO 2008/142045

(56) Entgegenhaltungen:
- EP-A- 1 432 285
- WO-A-2004/104116
- DE-A1-102006 030 054
- US-B1- 6 495 624

## Beschreibung

Die Erfindung betrifft eine hydrophobe Oberflächenbeschichtung, insbesondere eine für elektronische und elektrotechnische Komponenten, die einfach und kostengünstig herstellbar ist.

Herkömmliche Schutzlacke für elektronische und/oder elektrotechnische Komponenten, wie z.B. elektronische Flachbaugruppen, Isolatoren und Komponenten im Bereich Bahnelektrifizierung und Energieübertragung auf der Basis von beispielsweise Alkyd, Epoxid, Polyurethan (PU) und/oder Silikon Materialien zeigen mit Ausnahme der Silikonlacke relativ hohe Oberflächenenergien. Die Kontaktwinkel gegen Wasser liegen in der Regel bei <80°, Silikonlacke erreichen ca. 110°. Die meisten Lackoberflächen werden folglich mit Wasser leicht benetzt.

In feuchter Umgebung können beim Einsatz von unbeschichteten und mit Alkyd/Epoxiden etc. beschichteten Komponenten die elektrischen Kontakte durch spreitende oberflächenbenetzende Wasserkondensate leitend verbunden werden, was häufig zum Ausfall der Komponenten durch Kriechstrombildung führt. Konventionelle Lacke, wie auch Silikonlacke, nehmen bei Wasserlagerung Wasser auf. Durch Mikrorisse im Lack kann die Feuchte entsprechend tief eindringen und eine leitende Verbindung schaffen. Salze und Verunreinigungen erhöhen dabei die Leitfähigkeit und damit die Gefahr einer elektrolytischen Korrosion von elektrotechnischen Komponenten wie beispielsweise Leiterbahnen und/oder Steckerkontakten.

Es gibt fluorbasierte Überzüge (z.B. Teflon AF von DuPont, EGC1700 von 3M), die zwar hydrophob sind, aber bei Wasserlagerung eine deutliche Abnahme des Kontaktwinkels, also auch der Hydrophobie, zeigen. Darüber hinaus besitzen sie keine ausreichende Haftung auf dem Substrat und/oder ihre mechanische Beständigkeit ist gering.

Es gibt auch Hydrophob-Additive, beispielsweise Wachse, hydrophobiertes SiO₂ Pulver und/oder diverse Aerosil-Typen, deren homogene Einarbeitung in die Lacke jedoch schwierig ist.

Deshalb ist es Aufgabe der Erfindung, eine hydrophobe Oberflächenbeschichtung zu schaffen, die die Benetzung der Lacke mit Wasserkondensaten erschwert.

Die Lösung der Aufgabe und der Gegenstand der Erfindung sind in den Ansprüchen, der Beschreibung und den Beispielen offenbart.

Gegenstand der Erfindung ist daher ein Schutzlack gemäß den Ansprüchen 1-6. Weiterhin Gegenstand der Erfindung sind Verwendungen gemäß den Ansprüchen 7-9.

Schutzlacke auf duroplastischer Kunststoffbasis sind beispielsweise Acrylharze, insbesondere isocyanatvernetzte Polyacrylharze, Polyurethanlacke wie beispielsweise FreiLacke EF-DEDUR UR 1040 (Fa. Emil Frei GmbH & Co) und/oder Klarlacke der Fa. Bayer Ag, wie z.B. das Produkt RR4821 (Fa.Bayer AG).

Geeignete Mikropulver, Nanopartikel und/oder Kolloide werden beispielsweise in Form vorgefertigter Sole eingesetzt. Das Mikropulver und/oder die Nanopartikel und/oder Kolloide umfassen bevorzugt SiO₂-Partikel und/oder Bornitrid-Partikel und zeichnen sich durch leichte Einarbeitbarkeit, Stabilität in der Lackmatrix und gegebenenfalls in Sol-Gel Systemen aus.

Die hydrophobe Funktionalisierung gelingt naturgemäß nur bei funktionalisierbaren Partikel und Mikropulver, und kann über alle gängigen hydrophoben Gruppen erfolgen, beispielsweise können folgende Funktionalitäten an SiO₂ Partikeln vorgesehen sein: Methyl-, Octyl-, Phenyl-, Fluoralkyl-, wie z.B. SiC₂H₅CₙF₂ₙ₊₁ mit n=1-8.

Durch Einarbeiten von hydrophob funktionalisierten SiO₂ Nanopartikel/Kolloide und von Bornitridpartikel in Form vorgefertigter Partikelsole und/oder Mikropulver in duroplastische Lackmatrices, werden hydrophobe Lackoberflächen mit niedrigen Oberflächenenergien erhalten.

In Polyurethan-Systemen (PU) können die Kontaktwinkel gegenüber Wasser von ca. 80° auf >120° angehoben werden.

Die SiO₂-Nanopartikel und/oder Kolloide werden z.B. in Form vorgefertigter Sole eingesetzt. Diese sind beispielsweise handelsüblich und Produkte der Firma FEW Chemicals, Wolfen, Deutschland, wie z.B. das H4019, werden eingesetzt.

Die Rezeptur einer beispielhaften Ausführungsform lautet: (Lack zusammensetzung nicht unter die Ansprüche fallend)

50g eines lösemittelhaltigen 2K-Polyurethanlackes (Isocyanat-vernetzbares Polyacrylharz) werden (je nach Anwendung) mit bis zu 200 g Butylacetat verdünnt und 5 min gerührt. Danach werden 1 - 1,5 g des hydrophob funktionalisierten SiO₂-Additives (H4019) zugegeben und weitere 15 min gerührt. Mit dieser Mischung werden Probekörper durch Tauchen und/oder Besprühen beschichtet. Die Probekörper werden 5 h bei RT getrocknet. Der Lack härtet nach ca. 48 h /RT oder nach 2 h bei 80°C aus.

Die fertige Lackmischung kann ca. 6 Stunden lang bei Raumtemperatur verarbeitet werden (Topfzeit). Die Kontaktwinkel gegen Wasser konnten im Vergleich zu unmodifizierten PU (mit einem Kontaktwinkel <85°) auf über 110° gesteigert werden. Die Schichtdicken der Schutzlackschicht können je nach Lackverdünnung/-Verarbeitung zwischen 200nm und 500µm eingestellt werden.

Neben den hydrophob funktionalisierten SiO₂-Partikeln konnte die Hydrophobie in PU- oder Silikonlacken durch Einarbeiten von Bornitrid (BN)-Mikropulver erhöht werden. Mit steigender BN-Konzentration nimmt die Hydrophobie der Lackoberflächen zu. Beispielhaft genannt sei ein PolyUrethan-Schutzlack, der ohne Zusatz einen Kontaktwinkel von 83° hat, während mit einem 10 Gew% Bornitrid-Zusatz ein Kontaktwinkel von 105° erreicht wird.

Ähnliches wurde im Fall der Silikonlacke beobachtet, wo ein reiner Silikonlack (Powersil der Fa. Wacker AG) einen Kontaktwinkel von 95°(Glas) bzw. 105° (Stahl) hat und mit einem 10% Zusatz an Bornitrid auf einen Kontaktwinkel von 122° kommt. Diese Werte konnten sogar noch gesteigert werden, da ein Zusatz von 20 Gew% Bornitrid zu einem Kontaktwinkel von 130° führte und ein Zusatz von 30 Gew% Bornitrid einen Kontaktwinkel von 135° bewirkte.

Bornitrid-Mikropulver kann in Mengen von 5 bis zu 60Gew% in den Schutzlack eingearbeitet sein, bevorzugt in Mengen zwischen 5 und 50 Gew%, insbesondere bevorzugt in Mengen zwischen 10 und 35 Gew%, wie die Ausführungsbeispiels belegen.

Im Folgenden wird die Erfindung anhand ausgewählter Ausführungsbeispiele näher erläutert:

Grundsätzlich eignen sich PU-Lacke wegen der hohen Witterungsbeständigkeit gut für Außenanwendungen und Beschichtungen im flüssigen Medium.

### Beispiel 1:

### Beschichtung von Metallen/Schutz in wässrigen Medien von Elektronischen Baugruppen, Kondensatoren, Sensoren, Maschinenbau für die elektronische Fertigung/Bestückung(Reflowöfen,..),

Lackzusammensetzung: 3,4 g Desmophen 670 (Bayer AG: Formulierung RR4821 oder FreiLacke:EFDEDUR) 1,8g Desmodur N3390 (Fa. Bayer), 20g Butylacetat und 0,3g H4019 (Fa. FEW Chemicals. Als Träger wurden Metallsubstrate genommen. (Lackzusammensetzung nicht unter die Ansprüche fallend)

Die Langzeitstabilität des hydrophoben Oberflächeneffekts wurde mit beschichteten Metallplättchen (Schichtdicke <1 µm) nachgewiesen: Nach einer Lagerzeit in Wasser von 1000 Stunden nimmt der Kontaktwinkel von ca. 110° nur auf Werte > 90° ab - die Oberfläche bleibt damit hydrophob. Zum Vergleich: Der Kontaktwinkel von gewöhnlichen PU-Lacken liegt bei ca. 85° und sinkt während der Auslagerung auf ca. 70° ab.

### Beispiel 2: Schutzlackierung von Elektronik-Flachbaugruppen:

Die SiO₂ modifizierten PU-Lacke können besonders vorteilhaft in Funkmodulen, beispielsweise in RF-Modulen, eingesetzt werden, da dort, um Interferenzen zu vermeiden, grundsätzlich nur sehr dünne Schutzlackschichten von <200 nm Dicke aufgebracht werden. Die erfindungsgemäßen Schutzlacke bieten aber bereits in diesen Schichtdicken vollständigen Schutz.

Ähnliches gilt für Sensorsysteme im Automobilbereich, beispielsweise bei Radarsensoren.

### Beispiel 3: bestückte Elektronikbaugruppen und/oder Sensorbeschichtungen für Außen- und Innenanwendungen, beispielsweise im Automobilbereich: acoustic wave sensor)

Lackzusammensetzung: 3,4 g Desmophen 670, 1,8g Desmodur N3390 (Fa. Bayer), 45 g Butylacetat und 0,3 g H4019 (Fa. FEW Chemicals) . (Lackzummenzetzung nicht unter die Ansprüche fallend)

Beispielsweise wurden Elektronikbaugruppen für die Automobil-Anwendungen mit definiertem Design, z.B: HF-Baugruppen oder Sensoren mit dem erfindungsgemäßen Schutzlack überzogen.

Diese Module bestehen die geforderten Betauungstests nach IEC 60068-2-38 bzw. IEC 60068-2-78 nur mit den SiO₂ modifizierten PU-Beschichtungen. Nach der Beschichtung der Elektronikbaugruppen (Schichtdicke 170 nm) liegen die Kontaktwinkel einer erfindungsgemäßen Beschichtung bei 110°.

Erfindungsgemäß beschichtete Sensoren (AWS, Simaf) zeigen auch gegenüber dem Stand der Technik deutlich bessere Werte.

Die Erfindung weist eine Reihe von Vorteilen gegenüber dem Stand der Technik auf:

Zum einen werden sehr hohe Kontaktwinkel realisiert, in der Regel liegen die Kontaktwinkel der erfindungsgemäßen Schutzlacke bei über 110° gegen Wasser, obwohl die Erfindung natürlich unter Umständen auch Schutzlacke mit geringerem Kontaktwinkel umfassen kann.

Zum zweiten handelt es sich um eine kostengünstige Variante zur Herstellung der Schutzlacke, da nur geringe Mengen, beispielsweise 1 bis 10 Gew%, bevorzugt 3 bis 7 Gew% und insbesondere bevorzugt bis zu 5 Gew% an hydrophoben SiO₂ Nanoteilchen benötigt werden.

Die hydrophobierten Nanopartikel können durch einfaches Einmischen in die Lackkomponenten eingearbeitet werden. Spezielle Mischvorrichtungen wie z.B. Perlmühlen, Torusmühlen etc. sind nicht erforderlich. Die Verteilung der Nanopartikel im Lack ist sehr homogen, da die Partikel als stabile Sole eingearbeitet werden.

Ein großer Vorteil der erfindungsgemäßen Systeme ist, dass die hohen Kontaktwinkel der BN-gefüllten PU und Silikonsysteme auch bei höheren Temperaturen erhalten bleiben. Daher ist der Einsatzbereich, insbesondere der PU-Lacke, deutlich erweitert. So wird mit den erfindungsgemäßen hydrophoben PU-Lacken der Einsatzbereichen von bisher ca. 120-125°C auf Betriebstemperaturen für Anwendungen im Automobilbereich mit Betriebstemperaturen von 150°C bis 160°C in Frage.

Bei BN dotierten Silikonlacken bleiben die hohen Kontaktwinkel bei Temperaturen von über 200°C erhalten.

Die erfindungsgemäßen Schutzlacke bestehen alle die erforderlichen Kriechstromtests CTI 600.

Zudem haften die erfindungsgemäßen Schutzlacke gut, beispielsweise auf Faserverbundwerkstoffen, Kunststoffen, Aluminium, Stahl, und ähnlichen Substraten.

Deshalb kann der Schutzlack auch in extrem dünnen Schichtdicken aufgetragen werden und volle Wirkung entfallen, so kann der Schutzlack beispielsweise in einer Schichtdicke im Bereich zwischen 130 bis 250 nm bereits voll wirksam sein.

Die Erfindung betrifft eine hydrophobe Oberflächenbeschichtung, insbesondere eine für elektronische und elektrotechnische Komponenten, die einfach und kostengünstig herstellbar ist. Dazu werden Partikel und Mikropulver, insbesondere hydrophobe Partikel, in den Schutzlack eingearbeitet.

## Patentansprüche

1. Schutzlack auf duroplastischer Kunststoffbasis, in den Siliziumoxid (SiO₂) in Form von hydrophob funktionalisierten Nanopartikel und/oder Kolloiden eingearbeitet ist, und in den Bornitrid in Form von Mikropulver eingearbeitet ist.

2. Schutzlack nach Anspruch 1, wobei die SiO₂-Partikel in Form von vorgefertigten Solen und/oder Kolloiden eingearbeitet sind.

3. Schutzlack nach einem der vorstehenden Ansprüche, wobei das Mikropulver, die Nanopartikel oder die Kolloide in einer Menge von 0,5 bis 50 Gew.-% eingearbeitet sind.

4. schutzlack nach Anspruch 2, wobei das Bornitrid-Mikropulver in einer Menge zwischen 5 und 60 Gew.-% eingearbeitet ist.

5. Schutzlack nach einem der vorstehenden Ansprüche, wobei hydrophob funktionalisierte Siliziumdioxid-Nanopartikel in einer Menge von 1 bis 10 Gew.-% eingearbeitet sind.

6. Schutzlack nach einem der vorstehenden Ansprüche, wobei der Schutzlack eine Schichtdicke im Bereich von 130 bis 250 nm aufweist.

7. Verwendung des Schutzlackes nach einem der Ansprüche 1 bis 6 zur Beschichtung von Metallen und/oder zum Schutz in wässrigen Medien von elektronischen Baugruppen, Kondensatoren, Sensoren und/oder Maschinen für die elektronische Fertigung und/oder Bestückung.

8. Verwendung eines Schutzlackes nach einem der Ansprüche 1 bis 6 zur Schutzlackierung von Elektronik-Flachbaugruppen.

9. Verwendung eines Schutzlackes nach einem der Ansprüche 1 bis 6 für bestückte Elektronikbaugruppen und/oder Sensorbeschichtungen für Außen- und Innenanwendungen.

## Claims

1. Protective lacquer based on duroplastic plastic, into which silicon dioxide (SiO₂) is incorporated in the form of hydrophobically functionalized nanoparticles and/or colloids and into which boron nitride is incorporated in the form of micropowder.

2. Protective lacquer according to claim 1, with the SiO₂ particles being incorporated in the form of prefabricated sols and/or colloids.

3. Protective lacquer according to one of the preceding claims, with the micropowder, the nanoparticles or the colloids being incorporated in a quantity of 0.5 to 50% by weight.

4. Protective lacquer according to claim 2, with boron nitride micropowder being incorporated in a quantity between 5 and 60% by weight.

5. Protective lacquer according to one of the preceding claims, with hydrophobic silicon dioxide nanoparticles being incorporated in a quantity of 1 to 10% by weight.

6. Protective lacquer according to one of the preceding claims, with the protective lacquer having a coating thickness ranging from 130 to 250 nm.

7. Use of a protective lacquer according to one of claims 1 to 6 for coating metals and/or for protection in aqueous media of electronic modules, capacitors, sensors and/or machines for electronic production and/or assembly.

8. Use of a protective lacquer according to one of claims 1 to 6 for protective lacquering of electronic printed circuit boards.

9. Use of a protective lacquer according to one of claims 1 to 6 for assembled electronic printed circuit boards and/or sensor coatings for external and internal applications.

## Revendications

1. Vernis de protection à base d'une substance synthétique duroplastique, dans lequel on incorpore de l'oxyde de silicium (SiO₂) sous forme de nanoparticules et/ou de colloïdes fonctionnalisés pour les rendre hydrophobes, et dans lequel on incorpore du nitrure de bore sous la forme d'une poudre microscopique.

2. Vernis de protection selon la revendication 1, dans lequel les particules de SiO₂ sont incorporées sous la forme de sols et/ou de colloïdes préfabriqués.

3. Vernis de protection selon l'une quelconque des revendications précédentes, dans lequel la poudre microscopique, les nanoparticules ou les colloïdes sont incorporés en une quantité de 0,5 à 50 % en poids.

4. Vernis de protection selon la revendication 2, dans lequel la poudre microscopique à base de nitrure de bore est incorporée en une quantité entre 5 et 60% en poids.

5. Vernis de protection selon l'une quelconque des revendications précédentes, dans lequel des nanoparticules de dioxyde de silicium fonctionnalisées pour les rendre hydrophobes sont incorporées en une quantité de 1 à 10% en poids.

6. Vernis de protection selon l'une quelconque des revendications précédentes, dans lequel le vernis de protection présente une épaisseur de couche dans la plage de 130 à 250 nm.

7. Utilisation du vernis de protection selon l'une quelconque des revendications 1 à 6 pour l'enduction de métaux et/ou pour la protection dans des milieux aqueux de composants électroniques, de condensateurs, de capteurs et/ou de machines pour la fabrication électronique et/ou pour l'équipement.

8. Utilisation d'un vernis de protection selon l'une quelconque des revendications 1 à 6 pour le vernissage de protection de composants électroniques plats.

9. Utilisation d'un vernis de protection selon l'une quelconque des revendications 1 à 6 pour des composants électroniques équipés et/ou pour des enductions de capteurs pour des utilisations à l'extérieur et à l'intérieur.
